# EUROPÄISCHE PATENTSCHRIFT

(11) **EP 2 374 655 B1**
(45) Veröffentlichungstag und Bekanntmachung des Hinweises auf die Patenterteilung: **17.08.2016**
(21) Anmeldenummer: 11002173.0
(22) Anmeldetag: 27.06.2006
(51) Int. Cl.: B60N 2/235

(54) **Vorrichtung zum Verriegeln und Entriegeln mit einer Sicherung gegen Selbstöffnung**
Device for locking and unlocking with a means of preventing self-opening
Dispositif de verrouillage et de déverrouillage doté d'une sécurité contre l'ouverture automatique

(30) Priorität: 27.06.2005 DE 102005030050; 08.08.2005 DE 102005037832
(43) Veröffentlichungstag der Anmeldung: 12.10.2011
(62) Teilanmeldung aus: 06776085.0
(73) Patentinhaber: Johnson Controls GmbH, 51399 Burscheid (DE)
(72) Erfinder: Abraham, James, 51147 Köln (DE); Kirubaharan, Albert Reginold, 51399 Burscheid (DE); Kienke, Ingo, 42929 Wermelskirchen (DE); Bhavani, Prasad, N.S. Palaya Bangalore 76 (IN)
(74) Vertreter: Schwöbel, Thilo K.

(56) Entgegenhaltungen:
- DE-A1- 10 312 140
- DE-C1- 19 654 395
- US-A- 3 779 655
- US-A1- 2002 089 224

## Beschreibung

Die vorliegende Erfindung betrifft eine Vorrichtung, insbesondere für einen Kraftfahrzeugsitz, mit der das Verstellen eines ersten Beschlagteils und eines zweiten Beschlagteils relativ zueinander verriegelbar und entriegelbar ist und einen Sitz mit einer solchen Vorrichtung.

Vorrichtungen zum Verriegeln und Entriegeln von Kraftfahrzeugsitzen, wie sie beispielsweise in der US 2002/089224 A1 nach dem Oberbegriff des Anspruchs 1 beschrieben sind, müssen hohen Belastungen standhalten, um sich, insbesondere bei einem Unfall, nicht ungewollt zu öffnen und zu verstellen und damit eine zusätzliche Gefahr für die Insassen der Fahrzeuges darzustellen. Es hat sich beispielsweise gezeigt, dass Neigungsverstellvorrichtungen für Sitze im Gepäckrückhaltetest dazu tendieren, sich bei großer Belastung ungewollt zu-öffnen. Es hat deshalb nicht an Versuchen gefehlt, Sicherungen zur Verfügung zu stellen, die eine derartige selbsttätige Öffnung verhindern. Beispielhaft wird die Druckschrift DE 100 48 127 A1 genannt, die einen Beschlag für einen Fahrzeugsitz offenbart, bei dem an einem schwenkbar gelagerten Spannexzenter zur Sicherung der Klinke Sperrelemente vorgesehen sind, die das Verstellen des Spannexzenters bei einem Crash verhindern, so dass die Klinke sich nicht öffnen kann. Diese Vorrichtung hat jedoch den Nachteil, dass sie mit sehr geringen Toleranzen gefertigt und montiert werden muss, was sich nachteilig auf die Herstellungs- bzw. Montagekosten auswirkt.

Es war deshalb die Aufgabe der vorliegenden Erfindung, eine Vorrichtung zum Verriegeln und Entriegeln, insbesondere für ein Kraftfahrzeugsitz zur Verfügung zu stellen, die die Nachteile des Standes der Technik nicht aufweist.

Die Aufgabe wird gelöst mit einer Vorrichtung gemäß Patentanspruch 1.

Durch das zusätzliche Sicherungssegment des Antriebmittels wird die Verrastplatte gegen Selbstöffnen gesichert. Die Verrastplatte verbleibt daher bei großen Belastungen sicher in der Rastposition und verriegelt die Verrastklinke, so dass die Vorrichtung verriegelt ist.

Eine Rastposition im Sinne der Erfindung ist jede Position der Verfastplatte, in der die Verrastplatte die Verrastklinke verriegelt. Eine Freigabeposition im Sinne der Erfindung ist jede Position der Verrastplatte, in der sie die Verrastklinke nicht verriegelt.

Da die Vorrichtung bei großer Belastung sicher in der Rastposition verbleibt, ermöglicht das Vorhandensein des Sicherungssegmentes das Optimieren des Verriegelungswinkels dahingehend, dass das Entriegeln leichter und daher für den Nutzer komfortabler möglich ist. Der durch das Sicherungssegment entstandene Freiraum kann für eine komfortorientierte Auslegung genutzt werden.

Erfindungsgemäß weist das Antriebmittel ein Sicherungssegment und ein zweites Segment auf. Die Verrastplatte ist daher entweder nur mittels dem zweiten Segment oder mittels dem zweiten Segment und dem Sicherungssegment gemeinsam von der Rastposition in die Freigabeposition und zurück verstellbar.

In einer bevorzugten Ausführungsform ist das Antriebmittel um eine Antriebachse drehbar, wobei das Sicherungssegment durch Drehen des Antriebmittels um die Antriebachse von der Sicherungsposition in die Antriebposition und die Verrastplatte durch Drehen des Antriebmittels um die Antriebachse von der Rastposition in die Freigabeposition und zurück verstellbar ist. Daher erfolgt der Antrieb des Sicherungssegmentes auf derselben Achse, wie der Antrieb der Verriegelung und Entriegelung der Vorrichtung. Es werden keine weiteren Bauteile zum Betätigen des Sicherungssegmentes benötigt.

Bevorzugt wird das Antriebmittel mittels einer Handhabe betätigt. Der Fachmann versteht, dass auch eine elektrische Betätigung möglich ist.

Bevorzugt ist das zweite Segment entgegen der Kraft eines zweiten Kraftmittels um die Antriebachse drehbar, so dass die Verrastplatte mittels der Kraft des zweiten Kraftmittels in der Rastposition gehalten wird.

Erfindungsgemäß weist das Sicherungssegment ein erstes Form- und/oder Kraftschlussmittel und das zweite Segment ein zweites Form- und/oder Kraftschlussmittel auf, wobei das erste sowie das zweite Form- und/oder Kraftschlussmittel zumindest teilweise mit einem dritten Form- und/oder Kraftschlussmittel der Verrastplatte in Eingriff sind. Durch den gegenseitigen Eingriff der Form- und/oder Kraftschlussmittel wirkt eine Belastung auf die Verrastplatte auch form- und/oder kraftschlüssig auf das Antriebmittel, insbesondere auf das Sicherungssegment.

Bevorzugt ist die Verrastplatte um eine Verrastachse drehbar. Der Leerlauf entspricht dann einem Drehwinkel der Verrastplatte von ca. 3 - 5°.

Erfindungsgemäß ist das erste Form- und/oder Kraftschlussmittel ein Sicherungsmittel, das in der Rastposition in Eingriff mit einem vorderen Rastzahn des dritten Form- und/oder Kraftschlussmittels der Verrastplatte ist. Bei großer Belastung wird das Verstellen der Verrastplatte von der Rastposition in die Freigabeposition durch Zusammenwirken des Rastzahns mit dem Sicherungsmittel blockiert.

Der Fachmann versteht, dass der Rastzahn das Sicherungsmittel in der Rastposition bevorzugt hintergreift. In dieser Ausführungsform ist das Sicherungssegment vorzugsweise entgegen der Kraft eines ersten Kraftmittels um die Antriebachse drehbar, so dass das Sicherungssegment die Verrastplatte zusätzlich mittels der Kraft des ersten Kraftmittels in der Rastposition hält. Das erste Kraftmittel bewirkt, dass das Sicherungssegment bei Belastung, beispielsweise bei Fahrt des Fahrzeugs, in einer Position gehalten wird und nicht klappert.

Ebenfalls bevorzugt umfasst das Sicherungsmittel ein Verstellmittel, das in der Rastposition an einer Kontur des vorderen Rastzahns anliegt. In dieser Ausführungsform wird das Verstellmittel bei Antrieb des Sicherungssegmentes vor und/oder während des Verstellens der Verrastplatte verstellt, so dass es in der Antriebposition des Sicherungssegmentes die Verrastplatte nicht beim Verstellen behindert.

Bei Antrieb des Antriebmittels wird das zweiten Segment gemeinsam mit dem Sicherungssegment verstellt, so dass das Sicherungsmittel den Rastzahn nicht behindert. Aufgrund von Toleranzen der Vorrichtung, beispielsweise aufgrund von Fertigungs- oder Herstellungstoleranzen, entsteht gegebenenfalls ein geringer Leerlauf beim Verstellen der Verrastplatte von der Rastposition in die Freigabeposition. Im wesentlichen ist das Verstellen jedoch ohne einen zusätzlichen Leerlauf möglich ist. Der Entriegelungswinkel ist daher im Gegensatz zur o. g. Ausführungsform, die einen bewussten zusätzlichen Leerlauf vorsieht, kleiner.

Die folgenden Ausführungen gelten für alle oben beschriebenen Ausführungsformen der Erfindung.

Vorzugsweise weist das Sicherungssegment zumindest einen Anschlag und das zweite Segment zumindest einen Gegenanschlag auf, so dass beim Verstellen des Antriebmittels das zweite Segment vom Sicherungssegment mitverstellt wird.

Bevorzugt weist das Antriebmittel ein Keilwellenprofil auf, das an der Antriebachse anliegt, so dass das zweites Segment beim Drehen der Antriebachse nicht verrutscht.

Weitere vorteilhafte Ausgestaltungen der Erfindung sind in den Unteransprüchen beschrieben.

Das Aufteilen des Antriebmittels in das Sicherungssegment und das zweite Segment ermöglicht eine erheblich größer Sicherheit gegen Selbstöffnen bei einem Unfall. Die Vorrichtung ist leichter entriegelbar. Der zusätzliche Bauteileaufwand beschränkt sich auf ein oder zwei Bauteile und ist daher sehr gering. Das Antriebmittel ist durch "Zusammenstecken" schnell und einfach montierbar. Die zusätzlichen Herstellungs-und Montagekosten sind daher gering.

Die Aufgabe wird ebenfalls gelöst mit einem Sitz, der eine erfindungsgemäße Vorrichtung aufweist. Die Sicherheit, das sich die Vorrichtung des Sitzes nicht ungewollt löst, insbesondere bei einem Unfall, ist erheblich verbessert. Beispielsweise bei Verwendung der Vorrichtung zum Verriegeln und Entriegeln der Neigung der Lehne gegenüber dem Sitzteil eines Sitzes in einem Kraftfahrzeug löst sich auch bei Belastung der Lehne, beispielsweise durch in den Fahrgastraum geschleudertes Gepäck bei einem Unfall, die Neigungsverstellung nicht. Für den Insassen bietet der erfindungsgemäße Sitz daher eine größere Sicherheit. Außerdem ist der Sitz leichter entriegelbar.
- Figur 1: zeigt eine Ausführungsform einer nicht erfindungsgemäßen Vorrichtung.
- Figur 2: zeigt eine Vorrichtung nach Figur 1 zumindest teilweise in einer Explosionsdarstellung.
- Figur 3: zeigt eine Ausführungsform einer erfindungsgemäßen Vorrichtung.
- Figur 4: zeigt die Verrastplatte in einem vergrößerten Ausschnitt der Vorrichtung der Figur 3 in der Rastposition sowie das Antriebmittel in der Sicherungsposition.
- Figur 5: zeigt das Entriegeln der Vorrichtung der Figuren 3 und 4, wobei die Verrastplatte in der Rastposition und in der Freigabeposition dargestellt ist und wobei das Antriebmittel in der Antriebposition dargestellt ist.
- Figur 6: zeigt die erfindungsgemäße Vorrichtung in einer Explosionsdarstellung.
- Figur 7: zeigt eine weitere Ausführungsform einer erfindungsgemäßen Vorrichtung.
- Figur 8: zeigt verschiedene Positionen der Vorrichtung der Figur 7.
- Figur 9: zeigt eine weitere erfindungsgemäße Vorrichtung.
- Figur 10: zeigt eine bekannte Vorrichtung ohne das Blockier- und das Sicherungsmittel. das Sicherungsmittel. blockierten Zustand, Vorrichtung im blockierten Zustand und

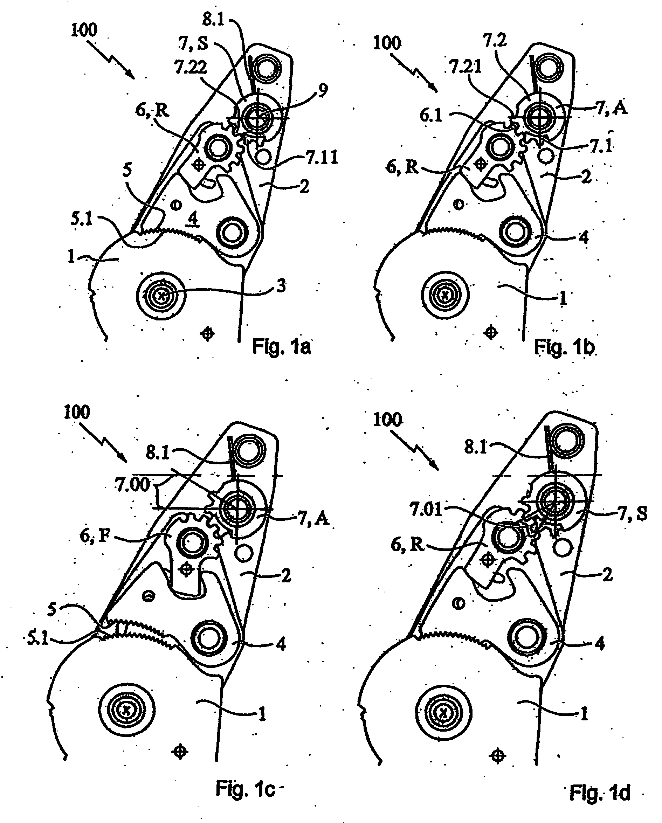

Figur 1 zeigt eine Ausführungsform einer Vorrichtung 100. Die Vorrichtung 100 ist ein Neigungsversteller (Recliner) zum Verstellen der Neigung einer Lehne eines Sitzes, die nicht gezeigt ist, gegenüber dem Sitzteil des Sitzes, das ebenfalls nicht gezeigt ist, wobei ein erstes Beschlagteil 1 an dem Sitzteil und ein zweites Beschlagteil 2 an der Lehne des Sitzes angeordnet sind. Daher weisen das erste und das zweite Beschlagteil 1, 2 eine gemeinsame Drehachse 3 auf, so dass durch Drehen des zweiten Beschlagteils 2 um die Drehachse 3 das zweite Beschlagteil 2 relativ zum ersten Beschlagteil 1 verstellbar ist. Die Vorrichtung 100 weist eine Verrastklinke 4 mit Form- und/oder Kraftschlussmitteln 5, hier einer Verzahnung, sowie eine Verrastplatte 6 auf. Die Verrastplatte 6 wirkt in ihrer Rastposition R form- und/oder kraftschlüssig mit der Verrastklinke 4 zusammen, die ihrerseits in einer Rastposition R form- und/oder kraftschlüssig mit einer Gegenverzahnung 5.1 des ersten Beschlagteils 1 zusammenwirkt. Die Verrastklinke ist drehbar an dem zweiten Beschlagteil 2 angeordnet, so dass sowohl das zweite Beschlagteil 2 als auch die Verrastklinke 4 in der Rastposition R relativ zum ersten Beschlagteil 1 arretiert sind. Die Verrastplatte 6 ist reversibel von der Rastposition R in eine Freigabeposition F mittels einem Antriebmittel 7 verstellbar. In der Freigabeposition F wirkt die Verrastplatte 4 form- und/oder kraftschlüssig mit der Verrastklinke 6 zusammen, so dass die Verrastklinke 6 verstellt, vom ersten Beschlagteil 1 abgehoben ist und nicht form- und/oder kraftschlüssig mit dem ersten Beschlagteil 1 zusammenwirkt. Die Vorrichtung 100 ist daher in der Freigabeposition F entriegelt. Zum Verstellen der Vemastplatte 6 weist das Antriebmittel 7 ein Sicherungssegment 7.1 mit einem ersten Form- und/oder Kraftschlussmittel 7.11 - 7.1i, hier zwei zueinander starren Zähnen 7.11, 7.12, sowie ein zweites Segment 7.2 mit einem zweiten Form- und/oder Kraftschlussmittel 7.21 - 7.2i, ebenfalls zwei zueinander starre Zähne 7.21, 7.22, auf. Die Zähne 7.11, 7.12, 7.21, 7.22 des Sicherungs- sowie des zweiten Segmentes 7.1, 7.2 weisen einen gleichen Zahnabstand 7.00 auf. Dagegen ist der Ubergangszahnabstand 7.01 zwischen dem vorderen Zahn 7.11 des Sicherungssegmentes 7.1 und dem hinteren Zahn 7.22 des zweiten Segmentes 7.2, die aneinander anliegen, in einer Sicherungsposition S des Antriebmittels 7 größer als der Zahnabstand 7.00. Die Zähne 7.11, 7.12, 7.21, 7.22 des ersten und des zweiten Form- und/oder Kraftschlussmittels 7.11 - 7.1 i, 7.21 - 7.2i weisen somit an dieser Übergangsstelle einen Teilungsfehler auf.

Das Antriebmittel 7 ist drehbar um eine Antriebachse 9 angeordnet und mit einer nicht dargestellten Handhabe verbunden.

Zum gewollten Verstellen der Verrastplatte 6 von der Rastposition R in die Freigabeposition F wird das Antriebmittel 7 um die Antriebachse 9 von der Sicherungsposition S in eine Antriebposition A gedreht, und zwar bevorzugt gegen die Kraft eines ersten Kraftmittels 8.1, vorzugsweise einer Feder. Dabei wird der Übergangszahnabstand 7.01 zwischen dem vorderen Zahn 7.11 des Sicherungssegment 7.1 und dem hinteren Zahn 7.22 des zweiten Segmentes 7.2 verringert, bis er in der Antriebposition A im wesentlichen gleich dem Zahnabstand 7.00 des ersten und des zweiten Form- und/oder Kraftschlussmittels 7.11 - 7.1 i, 7.21 - 7.2i ist, so dass der Zahnabstand 7.00 sowie der Übergangszahnabstand 7.01 am Antriebsmittel 7 gleichmäßig ist. Bevorzugt beträgt der benötigte Drehwinkel, um den das Antriebmittel 7 von der Sicherungsposition S in die Antriebposition A gedreht wird, ca. 3 - 5°. Danach werden das Sicherungssegment 7.1 und das zweite Segment 7.2 im wesentlichen synchron gedreht. Dafür weisen das Sicherungssegment 7.1 einen Anschlag 13.1 und das zweite Segment 7.2 einen Gegenanschlag 13.2 auf, die in der Antriebposition A aneinander anliegen, so dass das zweite Segment 7.2 beim Weiterdrehen mitgenommen wird. Die Verrastplatte 6 weist dritte Form- und/oder Kraftschlussmittel 6.1 auf, hier eine Tellverzahnung, die zumindest teilweise in Eingriff mit dem ersten und/oder zweiten Kraftschlussmittel 7.11 - 7.1 i, 7.21 - 7.2i sind und beim Drehen des Antriebmittels 7 mit diesen zusammenwirken, so dass die Verrastplatte 6 von der Rastposition R in die Freigabeposition F verstellt wird.

Die Figuren 1a - c zeigen das Verstellen des Sicherungssegmentes 7.1 von der Sicherungsposition S in die Antriebposition A und der Verrastplatte 6 von der Rastposition R in die Freigabeposition F.
- **Figur 1a** zeigt:: Sicherungssegment 7.1 in der Sicherungsposition S, Verrastplatte 6 in der Rastposition R, -> die Vorrichtung 100 ist verriegelt.
- **Figur 1 b** zeigt:: Sicherungssegment 7.1 in der Antriebposition A, Verrastplatte 6 in der Rastposition R, -> die Vorrichtung 100 ist verriegelt.
- **Figur 1c** zeigt:: Sicherungssegment 7.1 in der Antriebposition A, Verrastplatte 6 in der Freigabeposition F, -> die Vorrichtung 100 ist entriegelt.

Bei starker Belastung auf den verriegelten Sitz, insbesondere bei einem Unfall, versucht die Verrastplatte 6 ihrerseits, beispielsweise aufgrund von Massenträgheit, das Antriebmittel 7 entgegen der Kraft des Kraftmittels 9 in Richtung zur Freigabeposition F zu verstellen, s. Figur 1d. Aufgrund des größere Übergangszahnabstandes 7.01 gegenüber dem Zahnabstand 7.00 des ersten und des zweiten Form- und/oder Kraftschlussmittels 7.11 - 7.1 i, 7.21 - 7.2i kann das dritte Form- und/oder Kraftschlussmittel 6.1 der Verrastplatte 6 nicht in die Zähne 7.11, 7.12 des ersten Form- und/oder Kraftschlussmittels 7.11 - 7.1 i eingreifen. Die Zähne 7.11, 7.12, 7.21, 7.22 des Antriebmittels 7 können daher zwar die Verrastplatte 6 antreiben, ein ungewolltes Lösen der Verrastplatte 6 wird jedoch durch Sperren der Drehmomentübertragung zwischen der Verrastplatte 6 und dem Antriebmittel 7 verhindert. Die Vemastplatte 6 wird dabei zwar gegebenenfalls geringfügig von der Rastposition R aus in Richtung zur Freigabeposition F verstellt, die Rastposition R bleibt aber soweit erhalten, dass die Verrastung gesichert und die Vorrichtung verriegelt ist.
- **Figur 1d** zeigt:: Sicherungssegment 7.1 in der Sicherungsposition S, Verrastplatte 6 in der Rastposition R bei starker Belastung, -> die Vorrichtung 100 ist verriegelt.

Gegenüber herkömmlichen Vorrichtungen weist die erfindungsgemäße Vorrichtung 100 daher eine erhöhte Sicherheit gegenüber Selbstöffnung bei großer Belastung, insbesondere bei eine Unfall, auf.

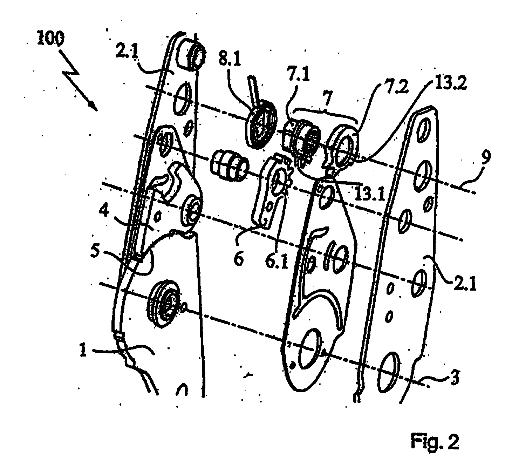

**Figur 2** zeigt eine erfindungsgemäße Vorrichtung 100 zumindest teilweise in einer Explosionsdarstellung. Das zweite Beschlagteil 2 weist zwei im wesentlichen gleiche zweite Beschlagteilkomponenten 2.1 auf, die parallel zueinander angeordnet sind und zwischen denen das erste Beschlagteil 1, die Verrastklinke 4, die Verrastplatte 6 sowie das Antriebmittel 7 angeordnet sind..

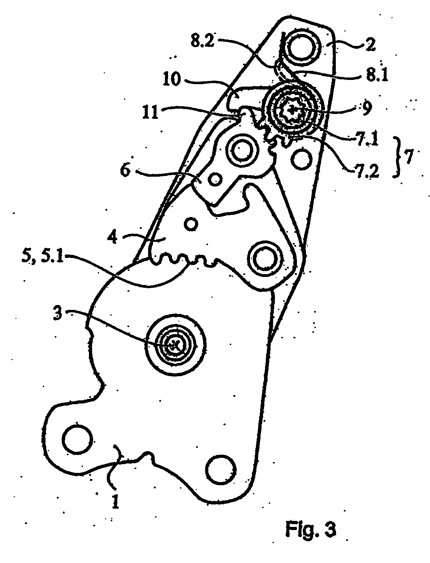

**Figur 3** zeigt eine Ausführungsform einer erfindungsgemäßen Vorrichtung 100, ebenfalls ein Neigungsversteller für die Lehne eines Sitzes eines Fahrzeugs. Die Vorrichtung 100 weist ebenfalls das erste Beschlagteil 1, das zweite Beschlagteil 2, die Verrastklinke 4 und die Verrastplatte 6 auf. Das zweite Beschlagteil 2 ist gegenüber dem ersten Beschlagteil 1 um die Drehachse 3 drehbar. Um das Drehen des zweiten Beschlagteils 2 zu verriegeln, weist die Verrastklinke 4 als Form-und/oder Kraftschlussmittel die Verzahnung 5 auf, mit der sie in Eingriff mit der Gegenverzahnung 5.1 des ersten Beschlagteils 1 ist. Die Verrastklinke 4 wird durch die Verrastplatte 6 in der Rastposition R gesichert und ist in die Freigabeposition F verstellbar, in der die Vorrichtung 100 entriegelt ist. Weiterhin weist die Vorrichtung 100 ebenfalls ein Antriebmittel 7 mit einem Sicherungssegment 7.1 und einem zweiten Segment 7.2 auf, dass um die Antriebachse 9 drehbar ist.

Im Gegensatz zu den Vorrichtungen 100 der **Figuren 1** **und** **2** ist das erste Form und/oder Kraftschlussmittel 7.11 - 7.1 i des Sicherungssegmentes 7.1 ein Sicherungsmittel 10 in Form eines Haken, der in der Rastposition R der Verrastplatte 6 kraft- und/oder formschlüssig mit dem vorderen Rastzahn 11 des dritten Form- und/oder Kraftschlussmittels 6.1 der Verrastplatte 6 zusammenwirkt. Außerdem weist die Vorrichtung 100 ein erstes Kraftmittel 8.1 sowie ein zweites Kraftmittel 8.2 auf, wobei das Sicherungssegment 7.1 entgegen der Kraft des ersten Kraftmittels 8.1 verstellbar ist und das zweite Segment 7.2 entgegen der Kraft des zweiten Kraftmittels 8.2. Beide Kraftmittel 8.1, 8.2 halten daher die Verrastplatte 6 in der Rastposition R.

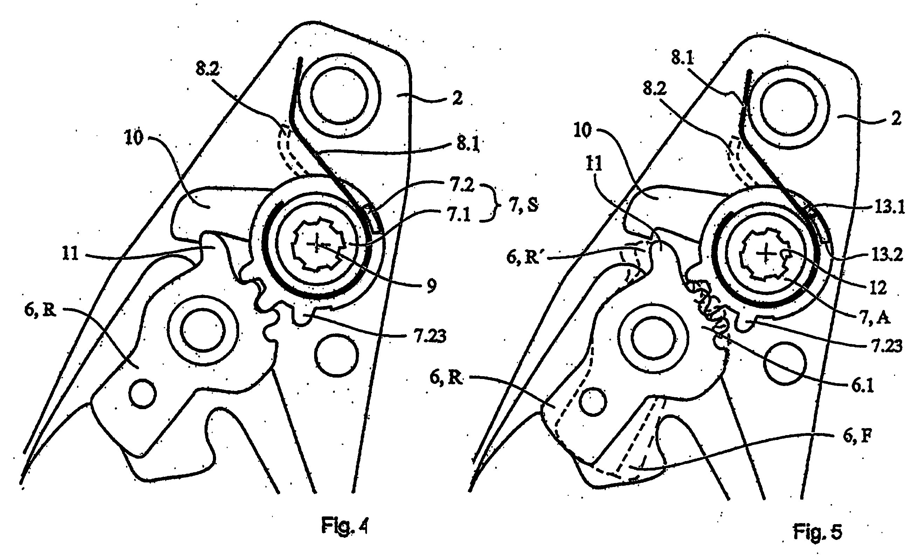

Figur 4 zeigt die Verrastplatte 6 in einem vergrößerten Ausschnitt der Vorrichtung 100 der **Figur 3** in der Rastposition R sowie das Antriebmittel 7 in de. Sicherungsposition S. Unter der Wirkung äußerer Kräfte, die beispielsweise auf die Verrastklinke 4 wirken, kann sich die Verrastplatte 6 nicht ungewollt öffnen, da das Sicherungsmittel 10 form- und/oder kraftschlüssig mit dem Rastzahn 11 zusammenwirkt und ein Verstellen der Verrastplatte 6 daher blockiert.

**Figur 5** zeigt das Entriegeln der Vorrichtung 100 der Figuren 3 und 4, wobei die Verrastplatte 6 in der Rastposition R, R' und in der Freigabeposition F dargestellt ist und wobei das Antriebmittel 7 in der Antriebposition A dargestellt ist. Beim Betätigen einer nicht dargestellten Handhabe, die ein über ein Keilwellenprofil 12 des Antriebmittels, das an der Antriebachse 9 anliegt, eingeleitetes Drehmoment erzeugt, wird das Sicherungsmittel 10 gegen die Kraft des ersten Kraftmittels 8.1 verdreht, bis der Rastzahn 11 nicht mehr vom hakenartigen Sicherungsmittel 10 umfasst wird. Dafür ist im wesentlichen kein zusätzliches Verstellen des Antriebmittels 7, also im wesentlichen kein zusätzlicher Leerlauf, erforderlich. Weiterhin wird das Drehmoment über den ersten Anschlag 13.1 des Sicherungssegmentes 7.1 und den zweiten Anschlag 13.2 des zweiten Segmentes 7.2 auf das zweite Segment 7.2 übertragen, so dass sich das Sicherungssegment 7.1 und das zweite Segment 7.2 synchron um die Antriebachse 9 drehen. Dabei wird die Verrastplatte 6 in die Freigabeposition F verstellt. Das erste und das zweite Kraftmittel sind bevorzugt Federn.

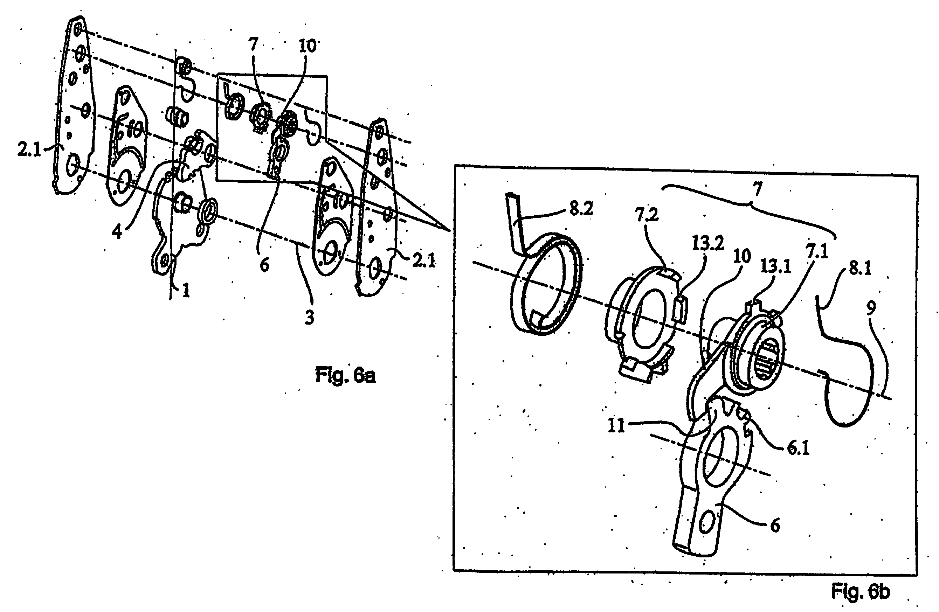

Figur 6 zeigt die erfindungsgemäße Vorrichtung mit einem Antriebmittel analog dem der Figuren 4 und 5 in einer Explosionsdarstellung. Entsprechend der Ausführungsform der **Figur 2** umfasst auch diese Ausführungsform zwei im wesentlichen gleiche zweite Beschlagteilkomponenten 2.1, die parallel zueinander angeordnet sind und zwischen denen das erste Beschlagteil 1, die Verrastklinke 4, die Verrastplatte 6 sowie das Antriebmittel 7 angeordnet sind.

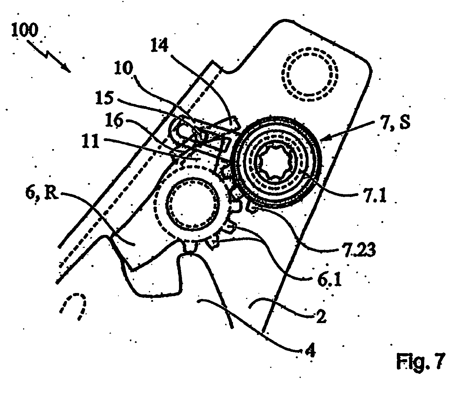

**Figur 7** zeigt eine weitere Ausführungsform einer erfindungsgemäßen Vorrichtung 100. In dieser Ausführungsform weist das Sicherungssegment 7.1 als Sicherungsmittel 10 eine Kulisse und ein Verstellmittel 15 auf, wobei das Verstellmittel 15 ein Bolzen ist, der entlang der Kulisse verstellbar ist. Das Verstellmittel 15 wird außerdem entlang einem Führungsmittel 14 des zweiten Beschlagteils 2 geführt. Das Führungsmittel 14 ist ebenfalls eine Kulisse. Im Folgenden werden die Begriffe Verstellmittel 15 und Bolzen synonym verwendet. Die Figur 7 zeigt die Verrastplatte 6 in der Rastposition R und das Sicherungssegment 7.1 des Antriebmittels 7 in der Sicherungsposition S. Beim Verstellen des Sicherungssegmentes 7.1 von der Sicherungsposition S in die Antriebposition A wird der Bolzen 15 entlang einer Kontur 16 des vorderen Rastzahns 11 der dritten Form-und/oder Kraftschlussmittel 6.1 der Verrastplatte 6 verstellt. Dabei wird die Vemastplatte 6 gleichzeitig mittels der zweiten Form- und/oder Kraftschlussmittel 7.21 - 7.2i des zweiten Segmentes 7.2 verstellt.

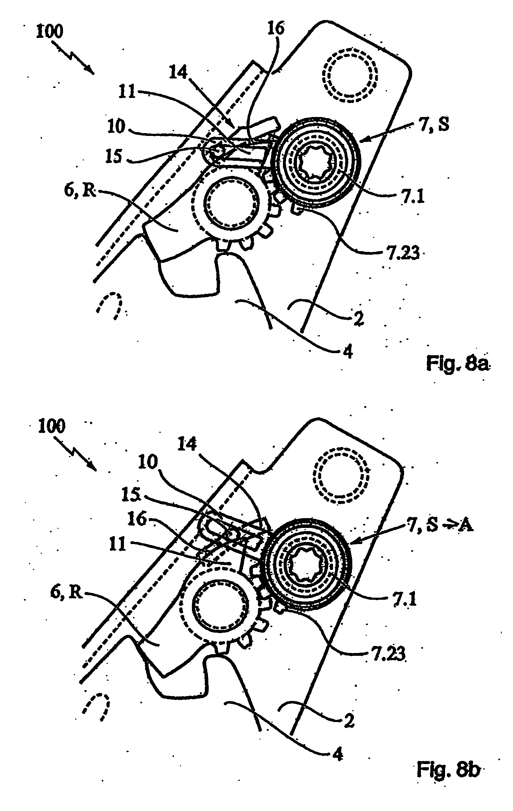

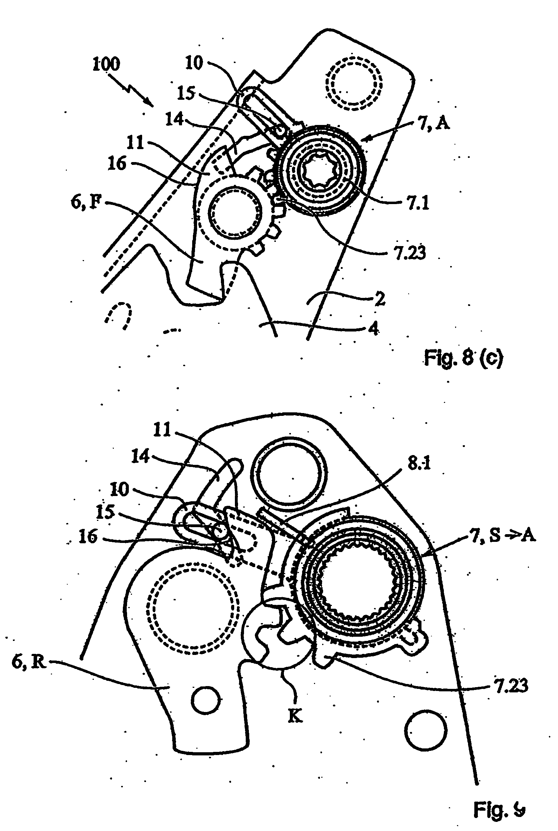

Figur 8 zeigt die erfindungsgemäße Vorrichtung 100 der Figur 7. Die Figur 8a zeigt den verriegelten Zustand der Vorrichtung 100. Wenn das Antriebmittel 7 nicht verstellt wird, ist die Verrastplatte 6 durch den Bolzen 15 in jeder Rastposition R gesichert. Die **Figur 8b** zeigt eine Position des Sicherungssegmentes 7.1 beim Verstellen des Sicherungssegmentes 7.1 von der Sicherungsposition S in die Antriebposition A. Die Verrastplatte 6 befindet sich noch in der Rastposition R. Um die Sicherheit gegen Selbstöffnung weiter zu erhöhen, weist das Führungsmittel 14 eine Krümmung auf, so dass ein Verstellen des Bolzens 15 aufgrund einer großen Belastung verhindert wird. Die Krümmung ist weiterhin so vorgesehen, dass das Verstellen des Bolzens 15 in der Antriebposition A des Sicherungssegmentes 7.1 bzw. in der Freigabeposition F der Verrastplatte 6 leicht erfolgt. In der Antriebposition A des Sicherungssegmentes 7.1 ist der Bolzen 15 so angeordnet, dass er das Verstellen der Vemastplatte nicht behindert. Die Figur 8c zeigt das Sicherungssegment 7.1 in der Antriebposition A. Die Verrastplatte 6 befindet sich in der Freigabeposition F. Die Verrastklinke 4, die hier nicht gezeigt ist, bzw. die Vorrichtung 100 ist entriegelt.

Figur 9 zeigt eine weitere erfindungsgemäße Vorrichtung 100 mit einem Sicherungsmittel 10 mit einer Kulisse und einem Bolzen 15 sowie einem Führungsmittel 14 in Form einer Kulisse. Im Gegensatz zur Vorrichtung 100 der Figuren 7 und 8 weist das Führungsmittel 14 eine Krümmung auf, bzw. weist die Verrastplatte 6 eine Kontur 16 auf, durch die bewusst ein zusätzliches Verstellen des Antriebmittels 7, also ein Leerlauf, erforderlich ist, bevor das Sicherungssegment 7.1 die Antriebposition A erreicht hat, in der die Verrastplatte 6 von der Rastposition R in die Freigabeposition F verstellbar ist. In **Figur 9** befindet sich das Sicherungssegment 7.1 noch bzw. wieder in der Sicherungsposition S. Die Verrastplatte 6 befindet sich in der Rastposition R. Der Kreis K zeigt den Eingriff des zweiten Form- und/oder Kraftschlussmittels 7.21 - 7.2i des zweiten Segmentes 7.2 mit den dritten Form- und/oder Kraftschlussmitteln 6.1 der Verrastplatte 6. Die zweiten und dritten Form- und/oder Kraftschlussmittel 7.21 - 7.2i, 6.1 sind nicht vollständig miteinander in Eingriff.

Eine herkömmliche Vorrichtung 100 mit einem Antriebmittel, das kein Sicherungssegment 7.1 aufweist, ist an die Anforderungen eines Sitzes anpassbar, lediglich indem das Antriebmittel 7 durch ein erfindungsgemäßes Antriebmittel 7 mit einem Sicherungssegment 7.1 und einem zweiten Segment 7.2 ersetzt wird. Das Anpassen des Sitzes gemäß den Anforderungen ist daher im Baukastenprinzip einfach und kostengünstig möglich.

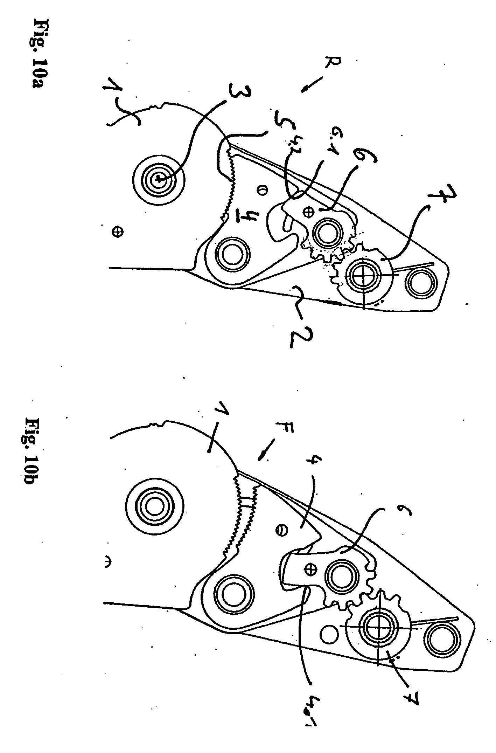

**Figur 10** zeigt eine bekannte Vorrichtung 100 jedoch ohne das Blockier-und das Sicherungsmittel. Die Vorrichtung 100 ist ein Neigungsversteller (Recliner) zum Verstellen der Neigung einer Lehne eines Sitzes, die nicht gezeigt ist, gegenüber dem Sitzteil des Sitzes, das ebenfalls nicht gezeigt ist, wobei ein erstes Beschlagteil 1 an dem Sitzteil und ein zweites Beschlagteil 2 an der Lehne des Sitzes angeordnet sind. Daher weisen das erste und das zweite Beschlagteil 1, 2 eine gemeinsame Drehachse 3 auf, so dass durch Drehen des zweiten Beschlagteils 2 um die Drehachse 3 das zweite Beschlagteil 2 relativ zum ersten Beschlagteil 1 verstellbar ist. Die Vorrichtung 100 weist eine Verrastklinke 4 mit Form- und/oder Kraftschlussmitteln 5, hier einer Verzahnung, sowie eine Verrastplatte 6 auf. Die Verrastplatte 6 wirkt in ihrer Rastposition R (vgl. Figur 10a) form- und/oder kraftschlüssig mit der Verrastklinke 4 zusammen, die ihrerseits in einer Rastposition R form- und/oder kraftschlüssig mit der Gegenverzahnung des ersten Beschlagteils 1 zusammenwirkt. Der Form- und/oder Kraftschluss zwischen der Verrastplatte 6 und der Verrastklinke 4 erfolgt durch ein Zusammenwirken der Flächen 6.1 bzw. 4.2.. Die Verrastklinke 4 ist drehbar an dem zweiten Beschlagteil 2 angeordnet, so dass sowohl das zweite Beschlagteil 2 als auch die Verrastklinke 4 in der Rastposition R relativ zum ersten Beschlagteil 1 arretiert sein müssen. Die Verrastplatte 6 ist reversibel von der Rastposition R (vgl. Figur 10a) gegen den Uhrzeigersinn in eine Freigabeposition F (vgl. Figur 10b) mittels eines Antriebmittels 7 verstellbar. In der Freigabeposition F wirkt die Verrastplatte 4 so mit der Verrastklinke 6 zusammen, dass die Verrastplatte 4 im Uhrzeigersinn dreht. In dem vorliegenden Fall drückt die Verrastplatte 6 gegen die Fläche 4.1 der Verrastklinke und dreht diese im Uhrzeigersinn. Dadurch wirkt die Verrastklinke 4 nicht mehr form- und/oder kraftschlüssig mit dem ersten Beschlagteil 1 zusammen. Die Vorrichtung 100 ist daher in der Freigabeposition F entriegelt.

Bei einer starken Belastung auf den verriegelten Sitz, insbesondere bei einem Unfall, versucht sich die Verrastplatte 6, beispielsweise aufgrund von Massenträgheit, gegen den Uhrzeigersinn zu verdrehen, was zu einer Entriegelung der Verratklinke 4 führen kann. Um dies zu Verhindern weist die erfindungsgemäße Vorrichtung 100 ein Blockier- und ein Sicherungsmittel auf, deren Funktion anhand der folgenden Figuren erläutert wird.

### Bezugszeichenliste:

- 100: Vorrichtung
- 1: Erstes Beschlagteil
- 2: Zweites Beschlagteil
- 2.1: Zweite Beschlagteilkomponente, Blockierungsmittel, Vorsprung
- 2.1.1: Kontur des Blockierungsmittel
- 3: Drehachse
- 4: Verrastklinke
- 4.2: Anlagefläche
- 5: Form- und/oder Kraftschlussmittel der Verrastklinke, Verzahnung
- 5.1: Gegenverzahnung
- 6: Vemastplatte
- 6.1: Drittes Form- und/oder Kraftschlussmittel, Kontur
- 6.2: Anlagefläche
- F: Freigabeposition der Verrastplatte
- R: Rastposition der Verrastplatte
- R'6.1: Radius der Kontur 6.1
- R"6.1: Radius der Kontur 6.1
Antriebmittel
- 7.1: Sicherungssegment
- 7.11 - 7.1 i: Erstes Form- und/oder Kraftschlussmittel
- 7.11: Vorderer Zahn des ersten Form- und/oder Kraftschlussmittels
- 7.2: Zweites Segment
- 7.21 - 7.2i: Zweites Form- und/oder Kraftschlussmittel
- 7.22: Hinterer Zahn des zweiten Form- und/oder Kraftschlussmittels
- 7.00: Zahnabstand
- 7.01: Übergangszahnabstand
- A: Antriebposition des Sicherungssegmentes des Antriebmittels
- S: Sicherungsposition des Sicherungssegmentes des Antriebmittels
- 8.1: Erstes Kraftmittel
- 8.2: Zweites Kraftmittel
- 9: Antriebachse

- 11: Vorderer Rastzahn des dritten Form- und/oder Kraftschlussmittels, Verbindungsmittel
- 12: Keilwellenprofil
- 13.1: Anschlag des Sicherungssegmentes
- 13.2: Gegenanschlag des zweiten Segmentes
- 14: Führungsmittel
- 15: Verstellmittel
- 16: Kontur des vorderen Rastzahns der dritten Form- und/oder Kraftschlussmittel

## Patentansprüche

1. Vorrichtung (100), insbesondere für einen Kraftfahrzeugsitz, mit der das Verstellen eines ersten Beschlagteils (1) und eines zweiten Beschlagteils (2) relativ zueinander verriegelbar und entriegelbar ist, mit einem Antriebmittel (7), einer Verrastplatte (6) und einer Verrastklinke (4), wobei die Verrastklinke (4) durch Verrasten mit dem ersten Beschlagteil (1) relativ zu diesem arretierbar ist, wobei die Verrastplatte (6) mittels dem Antriebmittel (7) reversibel verstellbar ist, wobei die Verrastplatte (6) das Verstellen der Verrastklinke (4) in einer Rastposition (R) verriegelt, und in einer Freigabeposition (F) entriegelt, wobei das Antriebmittel (7) ein Sicherungssegment (7.1) zum Sichern der Verrastplatte (6) gegen Selbstöffnen und ein zweites Segment (7.2) aufweist, **dadurch gekennzeichnet, dass** das Sicherungssegment (7.1) ein erstes Form-und/oder Kraftschlussmittel (7.11 - 7.1 i) und das davon separate zweite Segment (7.2) ein zweites Form- und/oder Kraftschlussmittel (7.21 - 7.2i) aufweist, und dass das erste sowie das zweite Form- und/oder Kraftschlussmittel (7.11 - 7.1 i, 7.21 - 7.2i) zumindest teilweise mit einem dritten Form- und/oder Kraftschlussmittel (6.1) der Verrastplatte (6) in Eingriff sind und das erste Form- und/oder Kraftschlussmittel (7.11 - 7.1 i) ein Sicherungsmittel (10) ist, das in der Rastposition (R) so in Eingriff mit einem vorderen Rastzahn (11) des dritten Form- und/oder Kraftschlussmittels (6.1) der Verrastplatte (6) ist, dass sich die Rastplatte nicht ungewollt öffnet.

2. Vorrichtung (100) nach Anspruch 1, **dadurch gekennzeichnet, dass** das Antriebmittel (7) um eine Antriebachse (9) drehbar ist, dass das Sicherungssegment (7.1) durch Drehen des Antriebmittels (7) um die Antriebachse (9) von der Sicherungsposition (S) in die Antriebposition (A) und die Verrastplatte (6) durch Drehen des Antriebmittels (7) um die Antriebachse (9) von der Rastposition (R) in die Freigabeposition (F) und zurück verstellbar ist.

3. Vorrichtung (100) nach Anspruch 2, **dadurch gekennzeichnet, dass** das Sicherungssegment (7.1) entgegen der Kraft eines ersten Kraftmittels (8.1) um die Antriebachse (9) drehbar ist.

4. Vorrichtung (100) nach einem der Ansprüche 2 oder 3, **dadurch gekennzeichnet, dass** das zweite Segment (7.2) entgegen der Kraft eines zweiten Kraftmittels (8.2) um die Antriebachse (9) drehbar ist.

5. Vorrichtung (100) nach einem der vorherigen Ansprüche **dadurch gekennzeichnet, dass** das Sicherungsmittel (10) ein Verstellmittel (15) umfasst, das in der Rastposition (R) an einer Kontur (16) des vorderen Rastzahns (11) anliegt.

6. Vorrichtung nach einem der vorherigen Ansprüche, **dadurch gekennzeichnet, dass** die Verrastklinke (4) Form- und/oder Kraftschlussmittel (5) aufweist, mit denen sie in der Rastposition (R) der Verrastplatte (6) mit dem ersten Beschlagteil (1) form- und/oder kraftschlüssig zusammenwirkt.

7. Vorrichtung nach einem der vorherigen Ansprüche, **dadurch gekennzeichnet, dass** die Verrastklinke (4) um eine Drehachse (3) drehbar am zweiten Beschlagteil (2) angeordnet ist.

8. Vorrichtung nach einem der vorherigen Ansprüche, **dadurch gekennzeichnet, dass** die Verrastplatte (6) in der Freigabeposition (F) mit der Verrastklinke (4) form- und/oder kraftschlüssig zusammenwirkt, so dass die Verrastklinke (4) nicht form- und/oder kraftschlüssig mit dem ersten Beschlagteil (1) zusammenwirkt.

9. Vorrichtung nach einem der vorherigen Ansprüche, **dadurch gekennzeichnet, dass** das Sicherungssegment (7.1) zumindest einen Anschlag (13.1) und das zweite Segment (7.2) zumindest einen Gegenanschlag (13.2) aufweist.

10. Sitz, **dadurch gekennzeichnet, dass** er eine Vorrichtung (100) nach einem der vorherigen Patentansprüche aufweist.

## Claims

1. Mechanism (100), in particular for a motor vehicle seat, by means of which the displacement of a first fitting part (1) and a second fitting part (2) may be locked and released relative to one another, with a drive means (7), a detent plate (6) and a detent pawl (4), the detent pawl (4) being able to be locked relative to the first fitting part (1) by latching thereto, the detent plate (6) being able to be reversibly displaced by means of the drive means (7), the detent plate (6) locking the displacement of the detent pawl (4) in a detent position (R), and releasing said displacement in a release position (F), the drive means (7) comprising a securing segment (7.1) for securing the detent plate (6) against self-opening and comprising a second segment (7.2), **characterized in that** the securing segment (7.1) comprises a first positive and/or non-positive connecting means (7.11-7.1i) and the second segment (7.2), which is separate therefrom, comprises a second positive and/or non-positive connecting means (7.21-7.2i), and **in that** the first and the second positive and/or non-positive connecting means (7.11-7.1i, 7.21-7.2i) are at least partially in engagement with a third positive and/or non-positive connecting means (6.1) of the detent plate (6) and the first positive and/or non-positive connecting means (7.11-7.1i) is a securing means (10) which, in the detent position (R), is in engagement with a front detent tooth (11) of the third positive and/or non-positive connecting means (6.1) of the detent plate (6) such that the detent plate does not inadvertently open.

2. Mechanism (100) according to Claim 1, **characterized in that** the drive means (7) may be rotated about a drive axle (9), **in that** the securing segment (7.1) is able to be displaced by rotating the drive means (7) about the drive axle (9) from the securing position (S) into the drive position (A) and the detent plate (6), by rotating the drive means (7) about the drive axle (9), being able to be displaced from the detent position (R) into the release position (F) and back.

3. Mechanism (100) according to Claim 2, **characterized in that** the securing segment (7.1) may be rotated counter to the force of a first force means (8.1) about the drive axle (9).

4. Mechanism (100) according to either of Claims 2 and 3, **characterized in that** the second segment (7.2) may be rotated counter to the force of a second force means (8.2) about the drive axle (9).

5. Mechanism (100) according to one of the preceding claims, **characterized in that** the securing means (10) comprises an adjustment means (15) which, in the detent position (R), bears against a contour (16) of the front detent tooth (11).

6. Mechanism according to one of the preceding claims, **characterized in that** the detent pawl (4) comprises positive and/or non-positive connecting means (5) by means of which it cooperates positively and/or non-positively in the detent position (R) of the detent plate (6) with the first fitting part (1).

7. Mechanism according to one of the preceding claims, **characterized in that** the detent pawl (4) is arranged rotatably about the rotational axis (3) on the second fitting part (2).

8. Mechanism according to one of the preceding claims, **characterized in that** the detent plate (6) in the release position (F) cooperates with the detent pawl (4) positively and/or non-positively so that the detent pawl (4) does not cooperate positively and/or non-positively with the first fitting part (1).

9. Mechanism according to one of the preceding claims, **characterized in that** the securing segment (7.1) comprises at least one stop (13.1) and the second segment (7.2) comprises at least one counterstop (13.2).

10. Seat **characterized in that** it comprises a mechanism (100) according to one of the preceding patent claims.

## Revendications

1. Dispositif (100), en particulier pour un siège de véhicule automobile, avec lequel le réglage d'une première partie de ferrure (1) et d'une deuxième partie de ferrure (2) l'une par rapport à l'autre peut être verrouillé et déverrouillé, comprenant un moyen d'entraînement (7), une plaque d'encliquetage (6) et un cliquet d'encliquetage (4), le cliquet d'encliquetage (4) pouvant être bloqué par rapport à la première partie de ferrure (1) par encliquetage avec cette dernière, la plaque d'encliquetage (6) pouvant être réglée de manière réversible par le biais du moyen d'entraînement (7), la plaque d'encliquetage (6) verrouillant le réglage du cliquet d'encliquetage (4) dans une position d'encliquetage (R), et le déverrouillant dans une position de libération (F), le moyen d'entraînement (7) présentant un segment de fixation (7.1) pour fixer la plaque d'encliquetage (6) de manière à l'empêcher de s'ouvrir automatiquement et présentant un deuxième segment (7.2), **caractérisé en ce que** le segment de fixation (7.1) présente un premier moyen d'engagement par correspondance de formes et/ou par force (7.11-7.1i) et le deuxième segment (7.2), qui est separé de celui-ci, présente un deuxième moyen d'engagement par correspondance de formes et/ou par force (7.21-7.2i), et **en ce que** le premier ainsi que le deuxième moyen d'engagement par correspondance de formes et/ou par force (7.11-7.1i, 7.21-7.2i) sont en prise au moins en partie avec un troisième moyen d'engagement par correspondance de formes et/ou par force (6.1) de la plaque d'encliquetage (6) et le premier moyen d'engagement par correspondance de formes et/ou par force (7.11-7.1i) est un moyen de fixation (10) qui est en prise avec une dent d'encliquetage avant (11) du troisième moyen d'engagement par correspondance de forme et/ou par force (6.1) de la plaque d'encliquetage (6) dans la position d'encliquetage (R), de telle sorte que la plaque d'encliquetage ne s'ouvre pas accidentellement.

2. Dispositif (100) selon la revendication 1, **caractérisé en ce que** le moyen d'entraînement (7) peut tourner autour d'un axe d'entraînement (9), **en ce que** le segment de fixation (7.1) peut être réglé par rotation du moyen d'entraînement (7) autour de l'axe d'entraînement (9) de la position de fixation (S) dans la position entraînement (A), et la plaque d'encliquetage (6) peut être réglée par rotation du moyen d'entraînement (7) autour de l'axe d'entraînement (9) de la position d'encliquetage (R) dans la position de libération (F) et inversement.

3. Dispositif (100) selon la revendication 2, **caractérisé en ce que** le segment de fixation (7.1) peut tourner à l'encontre de la force d'un premier moyen de force (8.1) autour de l'axe d'entraînement (9).

4. Dispositif (100) selon l'une quelconque des revendications 2 ou 3, **caractérisé en ce que** le deuxième segment (7.2) peut tourner à l'encontre de la force d'un deuxième moyen de force (8.2) autour de l'axe d'entraînement (9).

5. Dispositif (100) selon l'une quelconque des revendications précédentes, **caractérisé en ce que** le moyen de fixation (10) comprend un moyen de réglage (15) qui s'applique dans la position d'encliquetage (R) contre un contour (16) de la dent d'encliquetage avant (11).

6. Dispositif selon l'une quelconque des revendications précédentes, **caractérisé en ce que** le cliquet d'encliquetage (4) présente des moyens d'engagement par correspondance de formes et/ou par force (5) avec lesquels il coopère dans la position d'encliquetage (R) de la plaque d'encliquetage (6) avec la première partie de ferrure (1) par engagement par correspondance de formes et/ou par force.

7. Dispositif selon l'une quelconque des revendications précédentes, **caractérisé en ce que** le cliquet d'encliquetage (4) est disposé au niveau de la deuxième partie de ferrure (2) de manière à pouvoir tourner autour d'un axe de rotation (3).

8. Dispositif selon l'une quelconque des revendications précédentes, **caractérisé en ce que** la plaque d'encliquetage (6), dans la position de libération (F), coopère avec le cliquet d'encliquetage (4) par engagement par correspondance de formes et/ou par force, de telle sorte que le cliquet d'encliquetage (4) ne coopère pas par engagement par correspondance de formes et/ou par force avec la première partie de ferrure (1).

9. Dispositif selon l'une quelconque des revendications précédentes, **caractérisé en ce que** le segment de fixation (7.1) présente au moins une butée (13.1) et le deuxième segment (7.2) présente au moins une contre-butée (13.2).

10. Siège, **caractérisé en ce qu'**il présente un dispositif (100) selon l'une quelconque des revendications précédentes.
